**Europäisches Patentamt**

**European Patent Office**

**Office européen des brevets**

(19)

(11) **EP 1 350 818 A1**

(12) **EUROPÄISCHE PATENTANMELDUNG**

(43) Veröffentlichungstag:
08.10.2003 Patentblatt 2003/41

(51) Int Cl.⁷: **C09D 5/03**, C09D 7/12,
B41M 5/26

(21) Anmeldenummer: 03002958.1

(22) Anmeldetag: 11.02.2003

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(30) Priorität: **05.04.2002 DE 10217023**

(71) Anmelder: **Degussa AG**
**40474 Düsseldorf (DE)**

(72) Erfinder:
• **Waterkamp, Paul-Ludwig**
**45657 Recklinghausen (DE)**
• **Christoph, Wolfgang**
**45768 Marl (DE)**
• **Schiffer, Thomas, Dr.**
**45721 Haltern am See (DE)**
• **Scholten, Heinz, Dr.**
**45721 Haltern am See (DE)**

(54) **Laserbeschriftbare Beschichtung auf Basis eines Polymer-Pulvers**

(57)     Die Erfindung betrifft ein Polymerpulver zum Beschichten von metallischen Substraten, welches eine laserlichtaktive Verbindung enthält.
Die laserlichtempfindliche Verbindung enthält basische Kupferphosphate oder Molybdän(VI)-oxid oder Titandioxid allein oder in Kombination.

Printed by Jouve, 75001 PARIS (FR)

**Beschreibung**

Mit Laserlicht beschriftbare hochpolymere Materialien wurden bereits im Jahre 1989 in DE 39 17 294 beschrieben. Dabei handelt es sich um Formmassen, Halbzeuge und Fertigteile, also Kunststoffteile, die zunächst im Spritzguss gefertigt und anschließend mit einem Laser bestrahlt und dadurch an den bestrahlten Stellen selektiv und irreversibel verfärbt werden. Dadurch lassen sich die Spritzgussteile nachträglich und dauerhaft beschriften.

Ein erfolgreiches Anwendungsbeispiel ist die Beschriftung der Kappen für Computer-Tastaturen. Hierfür eignet sich insbesondere Polybutylenterephthalat (PBT), doch sind auch andere Polymere wie PE, PP, PS, PA66, PA 6 und PA12 zur Herstellung entsprechender laserbeschriftbarer Spritzgussteile geeignet.

Als laserlichtaktive Verbindungen eignen sich Verbindungen, die im sichtbaren Bereich des Lichtes keine oder eine nur schwache Eigenfarbe aufweisen und die unter Einwirkung von Laserlicht, dessen Wellenlänge außerhalb des sichtbaren Bereiches liegt, im sichtbaren Spektralbereich eine Markierung mit großem Farbkontrast ergeben. Als Laser werden bevorzugt Nd-YAG-Laser mit einer Wellenlänge von 1064 nm oder Excimer-Laser der Wellenlängen 308 nm und 351 nm verwendet.

Besonders geeignet sind hierfür Molybdän(VI) -Oxid ($MoO_3$) und Kupferhydroxyd-phosphat (*Libethenit*) $Cu_3(PO_4)_2 * Cu(OH)_2$, im Folgenden kurz CHP genannt, welches gemäß EP 0 143 933 B1 hergestellt werden kann. In DE 199 05 358 werden Alkalikupferdiphosphate als laserlichtaktive Substanzen beschrieben.

Typischerweise werden 0,02 bis 4,5 Gew.-% laseraktives Material in den Formmassen eingesetzt. Als weiterer Zuschlagstoff zur Kontrastverbesserung werden gemäß DE 39 17 294 zusätzlich 0,2 bis 2,0 Gew.-% Titandioxid zugesetzt. Ferner können Pigmente, welche im sichtbaren Bereich des Lichtes absorbieren zugesetzt werden, um dem Bauteil eine entsprechende Eigenfarbe zu geben.

Eine laserbeschriftbare Beschichtung von Metalloberflächen gestaltet sich aufwendig. Für den Lackbereich werden laserbeschriftbare Überzüge in EP 0 665 118 beschrieben, bei dem basisches Kupferphosphat als laserlichtaktive Verbindung verwendet wird. Der Überzug besteht dabei aus einem 2-Komponenten-Polyurethanlack (hydroxylgruppenhaltiges Acrylatharz plus Polyisocyanatharz). Nach Reaktion der beiden Komponenten und Aushärten des Harzes in einem Wärmeofen kann der Überzug wie oben beschrieben mit Laserlicht beschriftet werden. Auch hierbei können dem Lack Pigmente zugesetzt werden, die im sichtbaren Bereich des Spektrum absorbieren, um dem Lack eine bestimmte Eigenfarbe zu geben.

In der Technik ist es jedoch üblich, dass bei solchen Lackierungen über die laserlichtbeschriftbare Lackschicht weitere Klarlackschichten aufgetragen werden. Diese mehrschichtige Lackierung ist aufwendig in der Herstellung. Sie erlaubt scharfe und gut lesbare Beschriftungen, allerdings ist eine nachträgliche Beschriftung durch einen Laser nach Aufbringen des Klarlackes nur noch sehr eingeschränkt möglich.

In US 6 238 847 werden auf eine Materialoberfläche, welche aus Metall, Kunststoff oder Glas bestehen kann, laserbeschriftbare Pasten aufgetragen; diese werden partiell belichtet und anschließend nicht belichtetes Material abgewaschen. Anschließend können Klarlacke als Schutzschicht aufgetragen werden.

In EP 1 110 660 werden laserbeschriftbare Beschichtungen auf Basis diverser Edelmetallsalze, insbesondere von Silber-, Gold- und Platinsalzen beschrieben. Diese Beschichtungen werden anschließend im Ofen bei Temperaturen oberhalb 500°C eingebrannt. Letztes Verfahren hat zudem den Nachteil einer sehr hohen Einbrenntemperatur.

Aus der Technik ist bekannt, dass sich Metallteile mit Kunststoffpulvern sehr einfach und wirksam beschichten lassen. Hierfür geeignete Verfahren sind insbesondere das Wirbelsintern, das Minicoat-Verfahren, das elektrostatische Beschichten und das Heißsprühen. Die Verfahren haben insbesondere in der Drahtwarenindustrie weite Verbreitung gefunden.

Beim Wirbelsintern wird ein heißes Metallteil in ein Becken mit fluidisierendem Kunststoffpulver getaucht. Das Kunststoffpulver schmilzt an der Metalloberfläche auf, haftet an dieser und verläuft zu einem gleichmäßigen Filmüberzug.

Beim Minicoat-Verfahren fallen heiße, meist kleine Metallteile durch das Kunststoffpulver, wobei sie solange Pulver anbinden, wie Wärme zum Aufschmelzen zur Verfügung steht. Die zunächst raue Beschichtung wird anschließend mit einer geeigneten Wärmequelle zu einem homogenen Filmüberzug aufgeschmolzen.

Beim elektrostatischen Beschichten haftet das Kunststoffpulver zuerst elektrostatisch auf der Metalloberfläche. Das beschichtete Metallteil wird anschließend in einem Ofen bis auf eine Temperatur oberhalb des Schmelzpunktes des Kunststoffs erhitzt, wobei die Beschichtung zu einem gleichmäßigen Filmüberzug verläuft.

In einer Variante, dem Heißsprühen, wird das Pulver direkt auf eine heiße Metalloberfläche gesprüht, wo es schmilzt und homogen verläuft.

Prinzipiell sind alle genannten Verfahren zur Beschichtung von Metallteilen mit einem Kunststoffüberzug geeignet. Je nach Größe und Form des Bauteils bietet jeweils das eine oder andere dieser Verfahren verarbeitungstechnische Vorteile.

Ziel der vorliegenden Erfindung war es, ein laserbeschriftbares Polymerpulver zu entwickeln, mit dem sich Metallteile einfach und schnell beschichten lassen.

Zudem war es Ziel der vorliegenden Erfindung, dass eine Laserbeschriftung auch nachträglich am fertigen Bauteil erfolgen kann, ohne dass dadurch die weiteren Eigenschaften der Kunststoffbeschichtung, zum Beispiel Korrosionsschutz, eingeschränkt werden. Eine nachträgliche Laserbeschriftung ist beim Stand der Technik insbesondere bei den mehrschichtigen Lackierungen nur sehr eingeschränkt möglich. Die Nachteile des Standes der Technik konnten nun durch Beschichtungen mit einem Polymer-Pulver, wie es in den Ansprüchen beschrieben wird, überwunden werden.

Es wurde nun gefunden, dass Polymerpulver, welche Kupferhydroxidphosphat, alkalische Kupferphosphate, Molybdäntrioxid und/oder Titandioxid enthalten, gut geeignet sind für laserbeschriftbare Kunststoffüberzüge. Als Polymere können alle pulverförmigen Kunststoffe verwendet werden, mit denen Beschichtungen nach einem der oben genannten Beschichtungsverfahren möglich sind.

In der Praxis haben sich vor allem thermoplastische Kunststoffüberzüge aus Polyethylen, PVC, Polyester und Polyamiden bewährt. Neuerdings werden auch amorphe Thermoplastpolymere auf Epoxidbasis angeboten. Für technisch anspruchsvolle Beschichtungen eignen sich insbesondere Polyamide und hierbei wiederum besonders solche, die Polyamid 11 und/oder Polyamid 12 enthalten.

Sie zeigen insbesondere beim Wirbelsintern ein vorteilhaftes Verarbeitungsfenster und bieten Kunststoffüberzüge mit hervorragenden mechanischen und chemischen Eigenschaften, wie zum Beispiel geringe Wasseraufnahme, hohe Beständigkeit gegen Salzwasser und Reinigungsmittel, hohe Elastizität, hohe Abriebfestigkeit und gute Kratzfestigkeit.

Das für das erfindungsgemäße Verfahren benötigte Polymer-Pulver kann durch alle gängigen Herstellverfahren wie zum Beispiel Vermahlen mit anschließendem Sieben und/oder Sichten gewonnen werden. Ganz besonders geeignet für die erfindungsgemäßen Kunststoffüberzüge sind Pulver, die ein Polyamid-Fällpulver gemäß DE 29 06 647 enthalten, da ein nach diesem Verfahren hergestelltes Polyamid-Pulver ein besonders rundes Korn mit guten Wirbeleigenschaften aufweist.

Die erfindungsgemäßen Pulver weisen eine mittlere Korngröße $d_{50}$ zwischen 10 und 150 μm auf, wobei die Kornobergrenze durch Schutzsiebung in der Regel zwischen 250 und 400 μm liegt und die Kornuntergrenze bei 1 bis 5 μm liegt. Die optimale Kornverteilung richtet sich nach dem jeweils gewählten Beschichtungsverfahren. Elektrostatikpulver weisen in der Regel eine geringere mittlere Korngröße auf als zum Beispiel Wirbelsinterpulver.

Die laserlichtaktiven Verbindungen lassen sich erfindungsgemäß auf verschiedene Weise in das Polymer-Pulver einbringen:

- Mit Hilfe eines Extruders lassen sich die laserlichtaktiven Verbindungen in das jeweilige Kunststoffgranulat eincompoundieren. Das Granulat wird anschließend vermahlen, gesiebt und/oder gesichtet.
- Beim Fällverfahren nach DE 29 06 647 B 1 können die laserlichtaktiven Komponenten während der Fällung zugegeben werden oder sie werden als Lösung auf das gefällte, noch feuchte Pulver aufgezogen.
- Die laserlichtaktiven Verbindungen lassen sich im Dry-Blend in das jeweilige Pulver einmischen.

Die laserlichtaktiven Verbindungen werden in der Regel in Anteilen von 0,01 bis 15 Gew.-%, bevorzugt von 0,1 bis 10 Gew.-%, eingesetzt.
Als nicht limitierende Beispiele für laserlichtaktive Verbindungen seinen genannt: Kupferhydroxidphosphat, welches z. B. gemäß EP 0 143 933 hergestellt werden kann, Alkalikupferdiphosphate wie Lithiumkupferdiphosphat, Natriumkupferdiphosphat und Kaliumkupferdiphosphat, welche durch Umsetzung von Tetraalkalidiphosphat und Cu(II)-Salzen gemäß Gmelin Handbuch der anorg. Chemie leicht entstehen. Aufgrund der geringen Eigenfarbe ist hierbei besonders das Kaliumsalz geeignet. Die Phosphatsalze sind kommerziell zum Beispiel von der chemischen Fabrik Budenheim als Budit 322 erhältlich. Als Metalloxide eignen sich vor allem Molybdän(VI)oxid und Titan(IV)oxid. Bei Titandioxid können sowohl Weißpigmente wie zum Beispiel Kronos 2310 oder Huntsman Tioxide RTC 30 verwendet werden, als auch nanoscalige Typen, die zum Beispiel von Degussa angeboten werden.

Mit dem erfindungsgemäßen Pulver lassen sich diverse Bauteile aus Metall einfach und wirksam beschichten. Geeignete Metalle sind insbesondere Eisen, Stahl, Aluminium und/oder Kupfer, sowie Legierungen daraus. Neben den oben erwähnten, bekannt guten Eigenschaften der Kunststoffbeschichtung bietet die Laserbeschriftbarkeit der Beschichtung dem Anwender zusätzlich eine einfache Möglichkeit, fertige Bauteile dauerhaft und irreversibel zu beschriften. Damit lassen sich wichtige Informationen des Herstellers wie zum Beispiel Bauteil- und Chargenbezeichnungen, Herstellername, Herstelldatum, Prüf- und Kontrollnummern etc. leicht und schnell auf dem Bauteil anbringen. Bisher wurden solche Informationen häufig auf Metallbleche gestanzt und aufwendig mit Nieten am Bauteil befestigt. Das erfindungsgemäße Pulver ermöglicht auch eine exakte und vollständige Beschriftung auf kleinen und/oder verwinkelten Bauteilen, sowie gewölbten Oberflächen (Drähten, Rohren) auf denen ein Typenschild nur schlecht befestigt werden kann.

Im Gegensatz zu den in der EP 0 665 118 beanspruchten Lacken bildet das erfindungsgemäße Polymer-Pulver einen thermoplastischen Kunststoffüberzug aus, bei dem kein Bindemittel benötigt wird.

Folgende Beispiele sollen die erfindungsgemäße Beschichtung näher erläutern, ohne dass sie auf diese Beispiele eingeschränkt wird.

Zur Kontrastwertbestimmung wird ein Farbmeßgerät DataColor SF 600 verwendet. Dabei werden die Normfarbwerte Y für die laserbestrahlte und die unbestrahlte Oberfläche gemessen und daraus das Kontrastverhältnis berechnet: $KV = \frac{Y \text{ unbelichtet}}{Y \text{ laserbelichtet}} \cdot 100$

Beispiel 1 (Vergleichsbeispiel):

Eine Stahlplatte (100*60*2 mm) wird zur Vorbehandlung entfettet, gestrahlt und entgratet. Anschließend wird sie im Ofen 10 Minuten bei 420 °C erwärmt und anschließend mit einem naturfarbenen Polyamid 12-Fällpulver gemäß DE 29 06 647 B1 mit einem mittleren Korndurchmesser von 90 μm im Wirbelsinterverfahren 3 sec. lang beschichtet. Nach dem Tauchen lässt man die Beschichtung 30 sec an der Luft gleichmäßig aufschmelzen und schreckt die Platte anschließend in einem Wasserbad (20°C) ab. Die Schichtdicke der Polyamidbeschichtung beträgt 280 μm.

Die beschichtete Platte wird mit einem Nd-Yag Laser (1064 nm) mit einer Stromaufnahme von 18,5 A und einer Impulsfrequenz von 2500 Hz mit einer Geschwindigkeit von 180 mm/sec belichtet.

Eine Verfärbung der Polymerschicht tritt nicht ein, die bestrahlte Fläche löst sich jedoch vom Untergrund, die Beschichtung wirft an dieser Stelle eine Blase. Ein Kontrastwert K läßt sich nicht ermitteln.

Beispiel 2:

Analog zu Beispiel 1 wird eine Stahlplatte mit einem Polyamid 12-Fällpulver gemäß DE 29 06 647 B1 mit einem mittleren Korndurchmesser von 90 μm im Wirbelsinterverfahren beschichtet, welches 1 Teil im Dry-Blend aufgemischtes Budit 322 enthält. Vorbehandlung, Aufheizen, Beschichten, Abschrecken und Bestrahlen erfolgen wie in Beispiel 1. Die Schichtdicke der Polymerschicht beträgt 270 μm.

Die bestrahlte Fläche zeigt eine dunkle, leicht angeraute Oberfläche mit K=79,2. Die bestrahlte Stelle löst sich nicht vom Untergrund und zeigt nach Wasserlagerung (5 d, 20 °C) keine Korrosion.

Beispiel 3:

Die Beschichtung aus Beispiel 2 wird einem Polyamid 12-Fällpulver mit 6 Teilen Titandioxid (Kronos, RTC 30), welches im Fällreaktor gemäß DE 29 06 647 B1 eingearbeitet wurde, mit einem mittleren Korndurchmesser von 90 μm im Wirbelsinterverfahren wiederholt. Die Schichtdicke beträgt 270 μm.

Die bestrahlte Fläche zeigt eine hellgraue, leicht angeraute Oberfläche mit K=125,7. Die bestrahlte Stelle löst sich nicht vom Untergrund und zeigt nach Wasserlagerung (5 d, 20 °C) keine Korrosion.

Beispiel 4:

Das Beschichtung aus Beispiel 3 wird wiederholt, wobei das Polyamid-12-Pulver zusätzlich 1 Teil Budit 322 im Dry-Blend aufgemischt enthält. Die bestrahlte Fläche zeigt eine dunkelgraue, leicht angeraute Oberfläche mit K=128,3.

Die bestrahlte Stelle löst sich nicht vom Untergrund und zeigt nach Wasserlagerung (5 d, 20 °C) keine Korrosion.

**Patentansprüche**

1. Thermoplastisches Polymerpulver zur Beschichtung von metallischen Substraten,
   **dadurch gekennzeichnet,**
   **dass** das Polymerpulver eine laserlichtempfindliche Verbindung enthält.

2. Polymerpulver nach Anspruch 1,
   **dadurch gekennzeichnet,**
   **dass** als laserlichtempfindliche Verbindung basische Kupferphosphate oder Molybdän(VI)- oxid oder Titandioxid allein oder in Kombination enthält.

3. Polymerpulver nach einem der vorangegangenen Ansprüche,
   **dadurch gekennzeichnet,**
   **dass** das Polymerpulver die laserlichtempfindliche Verbindung in einer Menge von 0,01 % - 15 % enthält.

4. Polymerpulver nach einem der vorangegangenen Ansprüche,
   **dadurch gekennzeichnet,**
   **dass** das Polymerpulver aus Polyethylen oder PVC oder Polyester oder Polyamid besteht.

5. Polymerpulver nach einem der vorangegangenen Ansprüche,
   **dadurch gekennzeichnet,**
   **dass** das Polymerpulver aus Polyamid 11 und/oder Polyamid 12 besteht.

6. Verfahren zur Beschichtung von metallischen Substraten mit Polymerpulver,
   **dadurch gekennzeichnet,**
   **dass** das Polymerpulver eine laserlichtempfindliche Verbindung enthält.

7. Verfahren zur Beschichtung von metallischen Substraten mit Polymerpulver,
   **dadurch gekennzeichnet,**
   **dass** mit einem Extruder die laserlichtempfindliche Verbindung in das Polymergranulat eincompoundiert wird.

8. Verfahren zur Beschichtung von metallischen Substraten mit Polymerpulver,
   **dadurch gekennzeichnet,**
   **dass** die laserlichtempfindliche Verbindung während des Fällverfahrens des Polymerpulvers zugegeben werden.

9. Verfahren zur Beschichtung von metallischen Substraten mit Polymerpulver,
   **dadurch gekennzeichnet,**
   **dass** die laserlichtempfindliche Verbindung im Dry-Blend-Verfahren in das Polymerpulver eingemischt wird.

10. Metallische Substrate, die mit Beschichtungen nach einem der vorangegangenen Ansprüche beschichtet sind.

**Europäisches Patentamt**

**EUROPÄISCHER RECHERCHENBERICHT**

Nummer der Anmeldung

EP 03 00 2958

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 94 11446 A (COURTAULDS COATINGS HOLDINGS ;KITTLE KEVIN JEFFREY (GB); RUSHMAN P) 26. Mai 1994 (1994-05-26)<br>* Seite 1, Zeile 28 - Zeile 31 *<br>* Seite 3, Zeile 34 - Seite 4, Zeile 7 *<br>* Seite 9, Zeile 12 - Zeile 22 *<br>* Seite 10, Zeile 21 - Zeile 26 *<br>* Seite 13, Zeile 8 - Zeile 12 *<br>* Seite 15, Zeile 25 - Zeile 34 *<br>* Seite 16, Zeile 5 - Zeile 9 *<br>* Seite 16, Zeile 33 - Zeile 36 *<br>--- | 1-4,6,7,10 | C09D5/03<br>C09D7/12<br>B41M5/26 |
| X | EP 0 345 032 A (DAINIPPON INK & CHEMICALS) 6. Dezember 1989 (1989-12-06)<br>* Seite 2, Zeile 31 - Zeile 40 *<br>* Seite 3, Zeile 7 - Zeile 20 *<br>* Seite 3, Zeile 50 - Seite 4, Zeile 2 *<br>* Seite 4, Zeile 47 - Zeile 50 *<br>--- | 1-4,6,10 | |
| D,X | US 4 334 056 A (MEYER KLAUS-RUDOLF ET AL) 8. Juni 1982 (1982-06-08)<br>* Spalte 1, Zeile 20 - Zeile 21 *<br>* Spalte 1, Zeile 62 - Zeile 63 *<br>* Spalte 3, Zeile 38 - Zeile 43 *<br>* Spalte 5, Zeile 45 - Zeile 50 *<br>* Spalte 5, Zeile 63 - Zeile 64 *<br>--- | 1,2,4-6,8,10 | RECHERCHIERTE SACHGEBIETE (Int.Cl.7)<br><br>C09D<br>B41M<br>C08K |
| X | US 5 063 137 A (HIRABAYASHI SATOSHI ET AL) 5. November 1991 (1991-11-05)<br>* Spalte 2, Zeile 54 - Zeile 62 *<br>* Spalte 3, Zeile 17 - Zeile 34 *<br>* Spalte 5, Zeile 18 - Zeile 27 *<br>--- | 1,4,6,10 | |
| X | US 5 422 383 A (TAKAHASHI JUN ET AL) 6. Juni 1995 (1995-06-06)<br>* Spalte 1, Zeile 50 - Zeile 62 *<br>* Spalte 3, Zeile 11 - Zeile 18 *<br>* Spalte 4, Zeile 11 - Zeile 39 *<br>--- | 1-4 | |

-/--

Der vorliegende Recherchenbericht wurde für alle Patentansprüche erstellt

| Recherchenort | Abschlußdatum der Recherche | Prüfer |
|---|---|---|
| DEN HAAG | 8. Juli 2003 | Matthijssen, J-J |

EPO FORM 1503 03.82 (P04C03)

## EUROPÄISCHER RECHERCHENBERICHT

**Europäisches Patentamt**

Nummer der Anmeldung

EP 03 00 2958

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 013 722 A (MERCK PATENT GMBH) 28. Juni 2000 (2000-06-28) * Spalte 2, Zeile 14 – Zeile 30 * * Spalte 5, Zeile 15 – Zeile 20 * * Beispiel 2 * | 1-4 | |
| D,X | EP 0 665 118 A (HUELS CHEMISCHE WERKE AG) 2. August 1995 (1995-08-02) * Seite 1, Zeile 1 – Zeile 26 * | 1-3 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 8. Juli 2003 | Matthijssen, J-J |

**ANHANG ZUM EUROPÄISCHEN RECHERCHENBERICHT
ÜBER DIE EUROPÄISCHE PATENTANMELDUNG NR.**                    EP 03 00 2958

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2003

| Im Recherchenbericht angeführtes Patentdokument | Datum der Veröffentlichung | Mitglied(er) der Patentfamilie | Datum der Veröffentlichung |
|---|---|---|---|
| WO 9411446        A | 26-05-1994 | AT    212369 T | 15-02-2002 |
| | | AU    682159 B2 | 25-09-1997 |
| | | AU   5427294 A | 08-06-1994 |
| | | BR   9307403 A | 29-06-1999 |
| | | CA   2148842 A1 | 26-05-1994 |
| | | CN   1088599 A ,B | 29-06-1994 |
| | | CZ   9501171 A3 | 13-12-1995 |
| | | DE  69331496 D1 | 14-03-2002 |
| | | DE  69331496 T2 | 19-09-2002 |
| | | DK    667889 T3 | 06-05-2002 |
| | | EP   0667889 A1 | 23-08-1995 |
| | | ES   2171421 T3 | 16-09-2002 |
| | | FI    952178 A | 05-05-1995 |
| | | WO   9411446 A1 | 26-05-1994 |
| | | GB   2287468 A ,B | 20-09-1995 |
| | | HK   1006031 A1 | 05-02-1999 |
| | | HU     72031 A2 | 28-03-1996 |
| | | JP   8503239 T | 09-04-1996 |
| | | NO    951764 A | 20-06-1995 |
| | | NZ    257600 A | 24-02-1997 |
| | | PL    308549 A1 | 21-08-1995 |
| | | PT    667889 T | 31-07-2002 |
| | | SG     45216 A1 | 16-01-1998 |
| | | SK     56695 A3 | 11-10-1995 |
| | | TR     27298 A | 29-12-1994 |
| | | US   5635548 A | 03-06-1997 |
| | | ZA   9308233 A | 29-06-1994 |
| EP 0345032        A | 06-12-1989 | JP   2136288 A | 24-05-1990 |
| | | JP   2913650 B2 | 28-06-1999 |
| | | DE  68927136 D1 | 17-10-1996 |
| | | DE  68927136 T2 | 06-03-1997 |
| | | EP   0345032 A2 | 06-12-1989 |
| | | JP   2048984 A | 19-02-1990 |
| | | JP   2734087 B2 | 30-03-1998 |
| | | US   5035983 A | 30-07-1991 |
| US 4334056        A | 08-06-1982 | DE   2906647 B1 | 17-04-1980 |
| | | AT     1820 T | 15-12-1982 |
| | | AU    529562 B2 | 09-06-1983 |
| | | AU   5571280 A | 28-08-1980 |
| | | CA   1135448 A1 | 09-11-1982 |
| | | EP   0014772 A1 | 03-09-1980 |
| | | JP   1181744 C | 09-12-1983 |
| | | JP  55115468 A | 05-09-1980 |
| | | JP  58013106 B | 11-03-1983 |

Für nähere Einzelheiten zu diesem Anhang : siehe Amtsblatt des Europäischen Patentamts, Nr.12/82

8

**ANHANG ZUM EUROPÄISCHEN RECHERCHENBERICHT
ÜBER DIE EUROPÄISCHE PATENTANMELDUNG NR.**

EP 03 00 2958

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2003

| Im Recherchenbericht angeführtes Patentdokument | Datum der Veröffentlichung | Mitglied(er) der Patentfamilie | | Datum der Veröffentlichung |
|---|---|---|---|---|
| US 4334056 A | | SU | 957771 A3 | 07-09-1982 |
| US 5063137 A | 05-11-1991 | KEINE | | |
| US 5422383 A | 06-06-1995 | CN | 1103649 A | 14-06-1995 |
| | | CN | 1190105 A | 12-08-1998 |
| | | JP | 7025154 A | 27-01-1995 |
| | | US | 5578120 A | 26-11-1996 |
| EP 1013722 A | 28-06-2000 | EP | 1013722 A1 | 28-06-2000 |
| | | CN | 1257896 A | 28-06-2000 |
| | | JP | 2000198945 A | 18-07-2000 |
| | | KR | 2000048331 A | 25-07-2000 |
| | | US | 6294010 B1 | 25-09-2001 |
| EP 0665118 A | 02-08-1995 | DE | 4402329 A1 | 03-08-1995 |
| | | EP | 0665118 A1 | 02-08-1995 |

EPO FORM P0461

Für nähere Einzelheiten zu diesem Anhang : siehe Amtsblatt des Europäischen Patentamts, Nr.12/82